# EUROPEAN PATENT SPECIFICATION

(11) **EP 4 331 976 B1**
(45) Date of publication and mention of the grant of the patent: **07.05.2025**
(21) Application number: 23193383.9
(22) Date of filing: 25.08.2023
(51) Int. Cl.: B64D 35/026, B64C 11/00, B64D 29/02, B64U 50/14, B64U 50/19, B64D 27/31, B64D 27/35, B64C 29/00

(54) **THRUST GENERATING DEVICE**
SCHUBERZEUGUNGSVORRICHTUNG
DISPOSITIF DE GÉNÉRATION DE POUSSÉE

(30) Priority: 30.08.2022 JP 2022136596
(43) Date of publication of application: 06.03.2024
(73) Proprietor: HONDA MOTOR CO., LTD., Minato-ku Tokyo 107-8556 (JP)
(72) Inventor: ISHITSUKA, Yuji, Saitama, 351-0193 (JP)
(74) Representative: Weickmann & Weickmann PartmbB

(56) References cited:
- EP-A1- 3 998 214
- GB-A- 2 589 072
- US-A- 4 371 133
- US-A1- 2016 311 522
- US-A1- 2021 276 706
- US-A1- 2022 267 015

## Description

### BACKGROUND OF THE INVENTION

### FIELD OF THE INVENTION

The present invention relates to a thrust generating device including a propeller and a duct covering the periphery of the propeller.

### DESCRIPTION OF THE RELATED ART

WO 2022/130501 A1 discloses a VTOL aircraft including a plurality of VTOL rotors and a plurality of cruise rotors. The cruise rotors each include a motor, a propeller, and a duct. The duct includes a cylinder, a hub, and a plurality of stators. The cylinder is disposed around the propeller. The hub is disposed inside the cylinder. Each stator extends radially from the hub to the cylinder.

### SUMMARY OF THE INVENTION

In the VTOL aircraft disclosed in WO 2022/130501 A1, each stator of the duct is arranged forward of the propeller. In this structure, the stator blocks the flow of air sucked into the propeller. Then, the flow of air sucked into the propeller is disturbed, and noise is generated.
US 2016/311522A1 and EP 3 998 214 A1 each disclose a thrust generating device including at least one propeller configured to generate thrust for causing an aircraft to move forward, the thrust generating device comprising: a propeller unit including the propeller, and a duct configured to cover a periphery of the propeller, wherein the duct includes a cylinder disposed around the propeller, a hub disposed inside the cylinder, and a plurality of stators extending radially from the hub to the cylinder, and the hub and each of the stators are disposed rearward of the propeller.
A similar thrust generating device is shown in GB 2 589 072 A. US 4 371 133 A discloses motor supported rearward of a rear wing of an aircraft.
US 2022/267015 A1 shows a harness to pass through rear wing, stay, cylinder, stator, and hub.
In US 2021/276706 A1 wings are arranged in a straight line with the respective two stators and hub of each propeller unit.

An object of the present invention is to solve the above-mentioned problem.

According to the present invention, there is provided a thrust generating device according to claim 1. Preferred embodiments are defined in the dependent claims.

According to the present invention, the thrust generating device includes at least one propeller configured to generate thrust for causing the aircraft to move forward, the thrust generating device including the propeller unit including the propeller and the duct configured to cover the periphery of the propeller, wherein the duct includes the cylinder disposed around the propeller, the hub disposed inside the cylinder, and the plurality of stators extending radially from the hub to the cylinder, and the hub and each of the stators are disposed rearward of the propeller.

According to the above configuration, it is possible to suppress noise caused by the stators. In addition, according to the above configuration, it is possible to prevent the amount of air sucked into the propeller from being limited due to the stators.

The propeller unit is supported by a rear wing of the aircraft and disposed rearward of the rear wing.

The thrust generating device further includes a motor that includes a rotation shaft connected to the propeller and that is configured to rotate the propeller, the motor is supported by the rear wing, and the propeller unit is disposed rearward of the motor.

The hub is connected to the rotation shaft of the motor via a bearing.

According to the above configuration, since the propeller, which is the vibration source, is located near the support point of the support member, it is possible to suppress vibration of the entire thrust generating device.

The propeller unit may include a shaft protruding rearward from the propeller, and the hub may be connected to the shaft via the bearing.

The thrust generating device may further include a first propeller unit and a second propeller unit as the propeller unit, and a connector disposed between the first propeller unit and the second propeller unit and configured to connect the first propeller unit and the second propeller unit, the first propeller unit may include a first duct as the duct, the second propeller unit may include a second duct as the duct, the first propeller unit and the second propeller unit may be lined up in the width direction of the aircraft, and the connector may connect the first duct and the second duct to each other.

In the above aspect, the first duct may include the first cylinder as the cylinder, the first hub as the hub, and two first stators as the stators, the second duct may include the second cylinder as the cylinder, the second hub as the hub, and two second stators as the stators, the connector may connect the first cylinder and the second cylinder to each other, and the connector, the first hub, the two first stators, the second hub, and the two second stators may be arranged in a straight line.

According to the above configuration, the rigidity of each cylinder is increased. Further, according to the above configuration, the moment acting on the support portion of the cruise rotor is reduced.

According to the present invention, the noise of the cruise rotors can be suppressed.

The above and other objects, features, and advantages of the present invention will become more apparent from the following description when taken in conjunction with the accompanying drawings, in which a preferred embodiment of the present invention is shown by way of illustrative example.

### BRIEF DESCRIPTION OF THE DRAWINGS

FIG. 1 is an external view of a VTOL aircraft;
FIG. 2 is a schematic view in which the structure of a cruise rotor of a thrust generating device according to a first embodiment is simplified;
FIG. 3 is a schematic view in which a structure of mounting a duct hub to a shaft member is simplified;
FIG. 4 is a rear view of the thrust generating device;
FIG. 5 is a rear view of the thrust generating device having a structure different from that shown in FIG. 4;
FIG. 6 is a schematic view in which the structure of the cruise rotor of the thrust generating device according to an example not presently being claimed is simplified; and
FIG. 7 is a schematic view in which the structure of the cruise rotor of the thrust generating device according to an example not presently being claimed is simplified.

### DETAILED DESCRIPTION OF THE INVENTION

### [1. Configuration of VTOL aircraft 10]

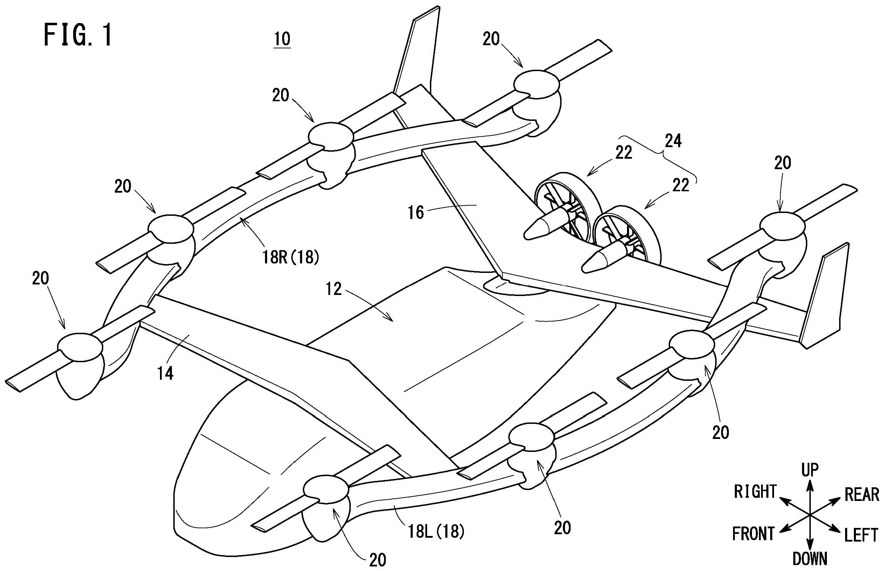

FIG. 1 is an external view of a VTOL aircraft 10. The VTOL aircraft 10 is, for example, an electric vertical takeoff and landing aircraft, or a so-called eVTOL aircraft. The VTOL aircraft 10 includes a fuselage 12, a front wing 14, a rear wing 16, two booms 18, eight VTOL rotors 20, and two cruise rotors 22.

In this specification, a direction in which the VTOL aircraft 10 flies when cruising is referred to as "forward", and a direction opposite to "forward" is referred to as "rearward". The forward flight of the VTOL aircraft 10 is referred to as "forward movement".

The front wing 14 is connected to a front portion of the fuselage 12. The rear wing 16 is connected to a rear portion of the fuselage 12. The front wing 14 and the rear wing 16 generate lift as the VTOL aircraft 10 moves forward.

A boom 18R of the two booms 18 is disposed on the right side of the fuselage 12. A boom 18L of the two booms 18 is disposed on the left side of the fuselage 12. Each boom 18 extends in the front-rear direction.

Four VTOL rotors 20 are arranged on the boom 18L sequentially toward the rear. Similarly, four VTOL rotors 20 are arranged on the boom 18R sequentially toward the rear. Each VTOL rotor 20 is used during takeoff, during vertical climb, during transition from climb to cruise, during transition from cruise to descent, during vertical descent, during landing, and during hovering. Each VTOL rotor 20 generates thrust in the vertical direction.

Two cruise rotors 22 are disposed on the rear wing 16 so as to be arranged side by side in the left-right direction. Each cruise rotor 22 is used during cruise, during transition from climb to cruise, and during transition from cruise to descent. Each cruise rotor 22 generates thrust in the horizontal direction. The one or more cruise rotors 22 included in the VTOL aircraft 10 are referred to as a thrust generating device 24.

The thrust generating device 24 causes air to flow from the front to the rear. As a result, the thrust generating device 24 generates thrust for flying the VTOL aircraft 10 in a substantially horizontal direction.

### [2. First Embodiment of Thrust Generating Device 24]

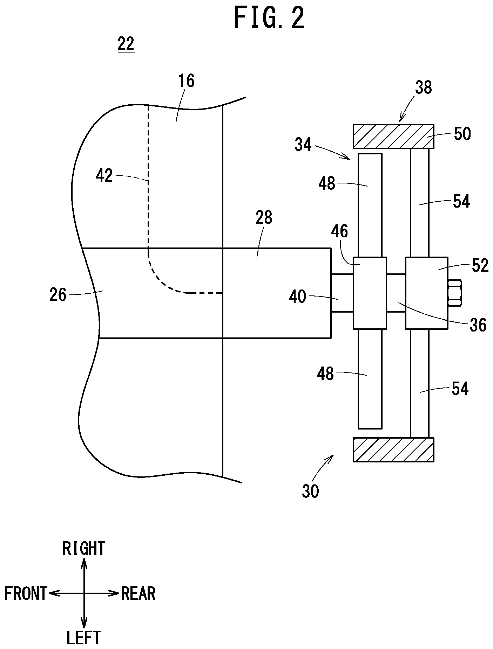

FIG. 2 is a schematic view in which the structure of the cruise rotor 22 of the thrust generating device 24 according to a first embodiment is simplified. The schematic view of FIG. 2 is a top view of the cruise rotor 22 in which a cylinder 50 of a duct 38 is vertically cut in half. The cruise rotor 22 includes one or more support members 26, a motor 28, and a propeller unit 30. The propeller unit 30 includes a propeller 34, a shaft member 36, and the duct 38.

The propeller unit 30 is supported by the rear wing 16 via the support member 26 and the motor 28. The axis of the motor 28, the axis of the propeller 34 (the axis of a blade hub 46), the axis of the shaft member 36, and the axis of the duct 38 (the axes of the cylinder 50 and a duct hub 52) are the same.

The motor 28 is supported by the support member 26. The motor 28 is connected to a rear end portion of the support member 26. The support member 26 is, for example, a pipe-shaped shaft. The support member 26 extends in the front-rear direction. The support member 26 is housed inside the rear wing 16 and is supported by a member provided inside the rear wing 16. That is, the motor 28 is supported by the rear wing 16 via the support member 26. A rotation shaft 40 of the motor 28 extends rearward.

A harness 42 for supplying electric power to the motor 28 is connected to the motor 28. The harness 42 extends from a power source (not shown) through the insides of the rear wing 16 and the support member 26, and is connected to the motor 28.

The propeller 34 includes the blade hub 46 and a plurality of blades 48. The propeller 34 is disposed rearward of the rear wing 16 and the motor 28. The blade hub 46 is arranged at the center of the propeller 34. The blade hub 46 is connected to a rear end portion of the rotation shaft 40 of the motor 28. Each blade 48 extends radially from the blade hub 46. Each blade 48 is connected to an outer circumferential surface of the blade hub 46.

The shaft member 36 is disposed rearward of the propeller 34. The shaft member 36 includes, for example, a pipe-shaped shaft portion. The shaft member 36 is connected to the blade hub 46 and extends rearward from the blade hub 46. Details of the shaft member 36 will be described later.

The duct 38 includes the cylinder 50, the duct hub 52, and a plurality of duct stators 54. The cylinder 50 is open forward and rearward. The cylinder 50 is disposed around the propeller 34. Specifically, the cylinder 50 is disposed so as to intersect the direction in which each blade 48 extends. The cylinder 50 covers the periphery of the propeller 34 and a space located rearward of the propeller 34. The duct hub 52 is disposed inside the cylinder 50 and rearward of the propeller 34. The duct hub 52 is connected to the shaft member 36. Each duct stator 54 extends radially from the duct hub 52 to the cylinder 50. Each duct stator 54 is connected to an outer circumferential surface of the duct hub 52 and an inner circumferential surface of the cylinder 50. Each duct stator 54 is disposed rearward of the propeller 34.

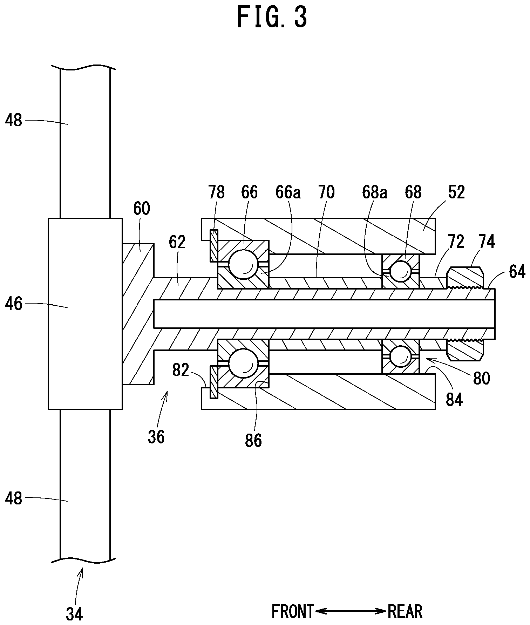

FIG. 3 is a schematic view in which a structure of mounting the duct hub 52 to the shaft member 36 is simplified. In FIG. 3, the duct stator 54 is omitted. The duct hub 52 is connected to the shaft member 36 via a front bearing 66 and a rear bearing 68. The front bearing 66 is disposed forward of the rear bearing 68. The outer diameter of the front bearing 66 is larger than the outer diameter of the rear bearing 68.

The shaft member 36 includes a mounting portion 60, a large diameter portion 62, and a small diameter portion 64. The mounting portion 60 is connected to a rear end portion of the blade hub 46. The large diameter portion 62 and the small diameter portion 64 are pipe-shaped shafts. The large diameter portion 62 extends rearward from a rear end portion of the mounting portion 60. The small diameter portion 64 extends rearward from a rear end portion of the large diameter portion 62. The outer diameter of the large diameter portion 62 is larger than the outer diameter of the small diameter portion 64.

The small diameter portion 64 is press-fitted into an inner ring 66a of the front bearing 66 and an inner ring 68a of the rear bearing 68. Further, the small diameter portion 64 is inserted through a front collar 70 and a rear collar 72. Furthermore, a nut 74 is attached to a rear end portion of the small diameter portion 64. The front bearing 66 is positioned by the inner ring 66a of the front bearing 66 abutting against the rear end portion of the large diameter portion 62. The front collar 70 is interposed between the inner ring 66a of the front bearing 66 and the inner ring 68a of the rear bearing 68. The front collar 70 abuts against a rear end portion of the inner ring 66a of the front bearing 66, and a front end portion of the inner ring 68a of the rear bearing 68. The rear bearing 68 is positioned by the inner ring 68a of the rear bearing 68 abutting against a rear end portion of the front collar 70. The rear collar 72 is interposed between the rear bearing 68 and the nut 74. The rear collar 72 abuts against a rear end portion of the inner ring 68a of the rear bearing 68 and a front end portion of the nut 74. The nut 74 is positioned by abutting against a rear end portion of the rear collar 72.

The duct hub 52 is provided with a through-hole 80 penetrating in the front-rear direction. The through-hole 80 includes a large diameter hole 82 and a small diameter hole 84. The inner diameter of the large diameter hole 82 is larger than the inner diameter of the small diameter hole 84. A step 86 is formed at a boundary between the large diameter hole 82 and the small diameter hole 84.

The front bearing 66 and the rear bearing 68 are attached to the shaft member 36 in advance. The shaft member 36 is inserted into the through hole 80 from the front side. Then, the rear bearing 68 is press-fitted into the small diameter hole 84. Further, the front bearing 66 is press-fitted into the large diameter hole 82. The duct hub 52 is positioned relative to the shaft member 36 by a rear end portion of the front bearing 66 and the step 86 abutting against each other. Further, a snap ring 78 which abuts against a front end portion of the front bearing 66 is fitted to the duct hub 52.

With the structure described above, the duct 38 is connected to the rear wing 16 via the two bearings (the front bearing 66 and the rear bearing 68), the shaft member 36, the propeller 34, the motor 28, and the support member 26. That is, the duct 38 is supported by the rear wing 16.

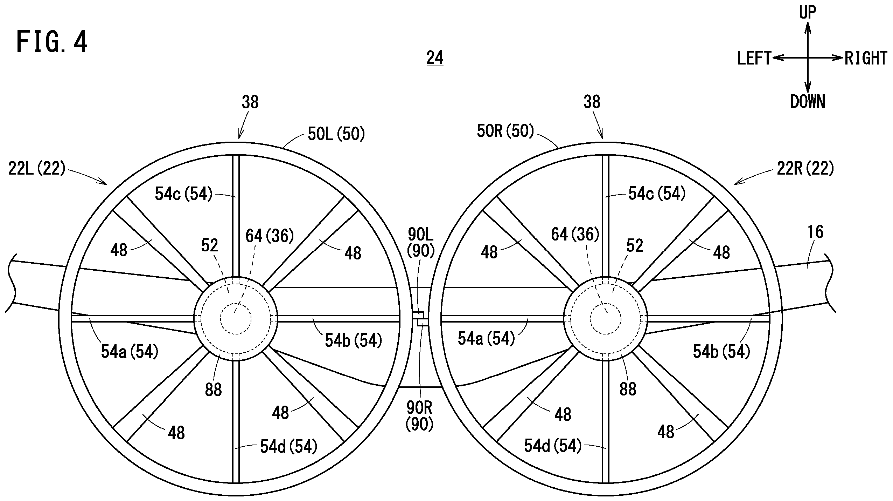

FIG. 4 is a rear view of the thrust generating device 24. A fairing 88 is attached to a rear end portion of the shaft member 36 of each cruise rotor 22 (the rear end portion of the small diameter portion 64). A cylinder 50L of a cruise rotor 22L on the left side and a cylinder 50R of a cruise rotor 22R on the right side are connected to each other by a connector 90. The connector 90 includes a left connector 90L and a right connector 90R. The left connector 90L is connected to a right end portion of an outer circumferential surface of the cylinder 50L and protrudes rightward. The right connector 90R is connected to a left end portion of an outer circumferential surface of the cylinder 50R and protrudes leftward. The left connector 90L and the right connector 90R are connected to each other. Note that the cylinder 50L and the cylinder 50R may be directly connected to each other without interposing the connector 90 therebetween.

As described above, the duct 38 is connected to the shaft member 36 via the two bearings (the front bearing 66 and the rear bearing 68). If the duct 38 is not connected to any member other than the shaft member 36, the duct 38 is rotatable with respect to the shaft member 36. However, in the present embodiment, as shown in FIG. 4, the two left and right ducts 38 are connected to each other. With this structure, each duct 38 does not rotate.

As shown in FIG. 4, the duct 38 preferably includes four duct stators 54. The four duct stators 54 are arranged at equal intervals (90 degree intervals) around the duct hub 52. A duct stator 54a extends leftward from the duct hub 52 toward the cylinder 50. A duct stator 54b extends rightward from the duct hub 52 toward the cylinder 50. A duct stator 54c extends upward from the duct hub 52 toward the cylinder 50. A duct stator 54d extends downward from the duct hub 52 toward the cylinder 50.

As shown in FIG. 4, from left to right, the duct stator 54a (a first stator) of the cruise rotor 22L, the duct hub 52 of the cruise rotor 22L, the duct stator 54b (the first stator) of the cruise rotor 22L, the connector 90, the duct stator 54a (a second stator) of the cruise rotor 22R, the duct hub 52 of the cruise rotor 22R, and the duct stator 54b (the second stator) of the cruise rotor 22R are arranged in a straight line. With this structure, the rigidity of each cylinder 50 is increased. Further, with this structure, the moment acting on the support portion (the support member 26) of the cruise rotor 22 is reduced.

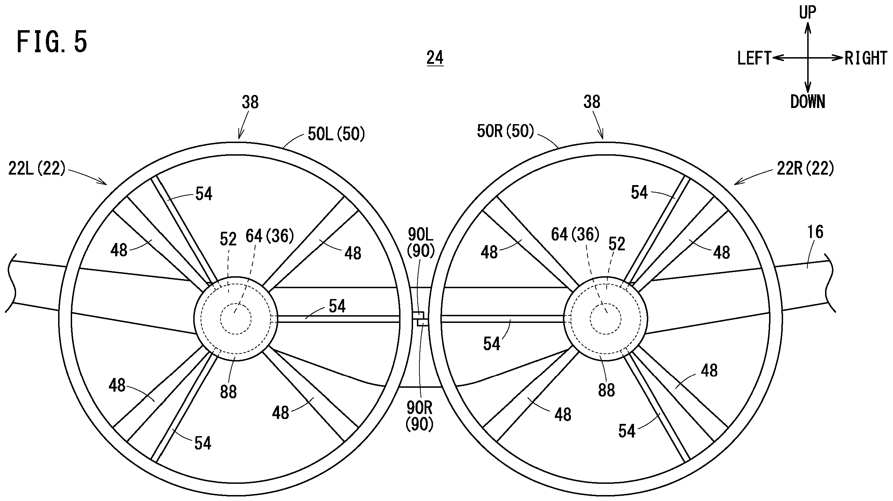

Note that, as shown in FIG. 5, the duct 38 may include three duct stators 54. In this mode, from left to right, the duct hub 52 of the cruise rotor 22L, one duct stator 54 of the cruise rotor 22L, the connector 90, one duct stator 54 of the cruise rotor 22R, and the duct hub 52 of the cruise rotor 22R are preferably arranged in a straight line. With this structure, the moment acting on the support portion (the support member 26) of the cruise rotor 22 is reduced.

As described above, in the first embodiment, each duct stator 54 is disposed rearward of the propeller 34. Therefore, each duct stator 54 does not block the flow of air sucked into the propeller 34 from the front side in accordance with the rotation of the propeller 34. Therefore, according to the first embodiment, it is possible to suppress noise caused by the duct stators 54. Further, according to the first embodiment, it is possible to prevent the amount of air sucked into the propeller 34 from being limited due to the duct stators 54.

### [3. Example of Thrust Generating Device 24 not presently being claimed]

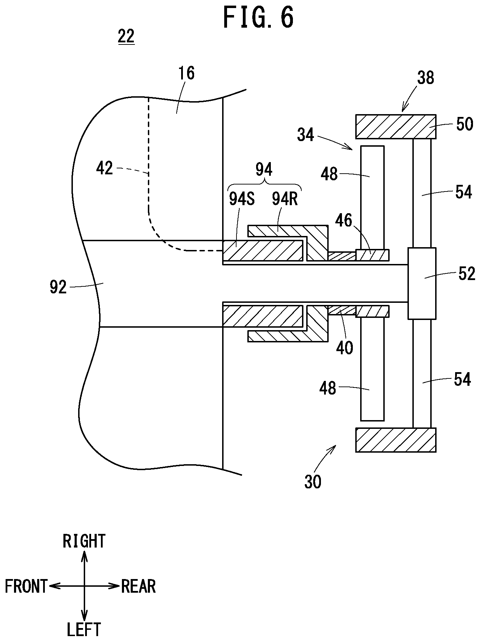

FIG. 6 is a schematic view in which the structure of the cruise rotor 22 of the thrust generating device 24 according to an example not presently being claimed is simplified. The schematic view of FIG. 6 is a top view of the cruise rotor 22 in which the cylinder 50 of the duct 38, the blade hub 46, and a motor 94 are vertically cut in half. In this example, the same components as those in the first embodiment are denoted by the same reference numerals. The cruise rotor 22 includes one or more support members 92, the motor 94, and the propeller unit 30.

The propeller unit 30 includes the propeller 34 and the duct 38. The propeller unit 30 is supported by the rear wing 16 via the support member 92. As shown in FIG. 6, the propeller 34 is disposed rearward of the motor 94. The duct hub 52 and each duct stator 54 are disposed rearward of the propeller 34. In this example, the duct 38 is directly connected to the support member 92.

The motor 94 is supported by the support member 92. The motor 94 is an outer rotor motor including a rotor 94R outside a stator 94S. The motor 94 is connected to a rear end portion of the support member 92. The support member 92 includes, for example, a pipe-shaped shaft. The support member 92 extends in the front-rear direction. The support member 92 passes through respective central portions of the stator 94S, the rotor 94R, the rotation shaft 40, and the propeller 34, and is connected to the duct hub 52. A portion of the support member 92 is housed inside the rear wing 16 and is supported by a member provided inside the rear wing 16.

In this example, each duct stator 54 is disposed rearward of the propeller 34. Therefore, each duct stator 54 does not block the flow of air sucked into the propeller 34 from the front side in accordance with the rotation of the propeller 34. Therefore, according to this example, it is possible to suppress noise caused by the duct stators 54. Further, according to this example, it is possible to prevent the amount of air sucked into the propeller 34 from being limited due to the duct stators 54.

In this example the connector 90 shown in FIG. 4 may be provided between two ducts 38 arranged side by side in the left-right direction. Also, the duct stators 54 may be arranged as shown in FIG. 4 or 5.

### [4. Another Example of Thrust Generating Device 24 not presently being claimed]

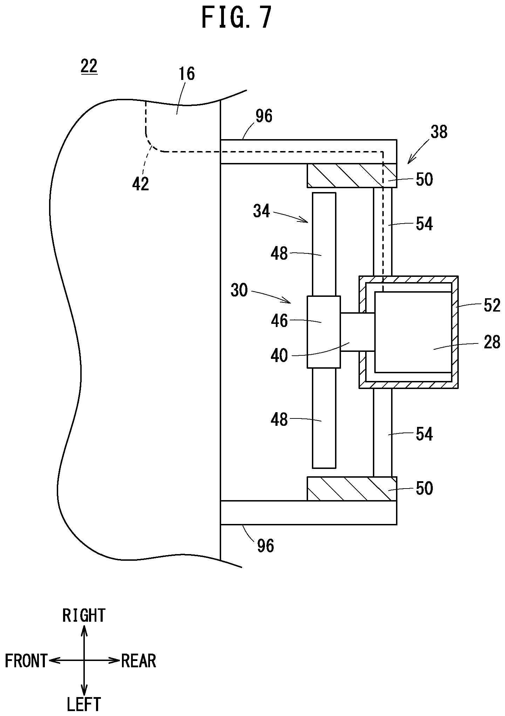

FIG. 7 is a schematic view in which the structure of the cruise rotor 22 of the thrust generating device 24 according to another example not presently being claimed is simplified. The schematic view of FIG. 7 is a top view of the cruise rotor 22 in which the cylinder 50 of the duct 38, and the blade hub 46 are vertically cut in half. In this example, the same components as those in the first embodiment are denoted by the same reference numerals. The cruise rotor 22 includes two support members 96, the motor 28, and the propeller unit 30.

The propeller unit 30 includes the propeller 34 and the duct 38. The propeller unit 30 is supported by the rear wing 16 via the support members 96. As shown in FIG. 7, the propeller 34 is disposed forward of the motor 28. The duct hub 52 and each duct stator 54 are disposed rearward of the propeller 34.

The two support members 96 are stays. One support member 96 is connected to the left side of an outer circumferential surface of the cylinder 50. The other support member 96 is connected to the right side of the outer circumferential surface of the cylinder 50. Each support member 96 is also connected to the rear wing 16. With this structure, the duct 38 is supported by the rear wing 16 via the two support members 96.

The motor 28 is housed inside the duct hub 52. The rotation shaft 40 of the motor 28 extends forward. A front end portion of the rotation shaft 40 is connected to the blade hub 46. The motor 28 is supported by the rear wing 16 via the duct 38 and the two support members 96.

The harness 42 extends from a power source (not shown) through the insides of the rear wing 16, the support member 96, the cylinder 50, and the duct hub 52, and is connected to the motor 28.

In this example, each duct stator 54 is disposed rearward of the propeller 34. Therefore, each duct stator 54 does not block the flow of air sucked into the propeller 34 from the front side in accordance with the rotation of the propeller 34. Therefore, according to this example, it is possible to suppress noise caused by the duct stators 54. Further, according to this example, it is possible to prevent the amount of air sucked into the propeller 34 from being limited due to the duct stators 54.

In this example, a shared support member 96 may be provided between the two ducts 38 arranged side by side in the left-right direction. Also, the duct stators 54 may be arranged as shown in FIG. 4 or 5.

### [5. Invention Obtained from Embodiments]

The invention that can be grasped from the above embodiment will be described below.

## Claims

1. A thrust generating device (24) including at least one propeller (34) configured to generate thrust for causing an aircraft (10) to move forward, the thrust generating device comprising:
a propeller unit (30) including the propeller; a duct (38) configured to cover a periphery of the propeller; and
a motor (28, 94) that includes a rotation shaft (40) connected to the propeller, and that is configured to rotate the propeller,
wherein the duct includes a cylinder (50) disposed around the propeller, a hub (52) disposed inside the cylinder, and a plurality of stators (54) extending radially from the hub to the cylinder,
the hub and each of the stators are disposed rearward of the propeller,
the propeller unit and the motor are configured to be supported by a rear wing (16) of the aircraft,
the propeller unit is disposed rearward of the motor, and
the hub is connected to the rotation shaft of the motor via a bearing (66, 68).

2. The thrust generating device according to claim 1, wherein
the propeller unit includes a shaft (36) protruding rearward from the propeller, and
the hub is connected to the shaft via the bearing.

3. The thrust generating device according to claim 1 or 2, further comprising:
a first propeller unit and a second propeller unit as the propeller unit; and
a connector (90) disposed between the first propeller unit and the second propeller unit and configured to connect the first propeller unit and the second propeller unit to each other, wherein
the first propeller unit includes a first duct as the duct,
the second propeller unit includes a second duct as the duct,
the first propeller unit and the second propeller unit are lined up in a width direction of the aircraft, and
the connector connects the first duct and the second duct to each other.

4. The thrust generating device according to claim 3, wherein
the first duct includes a first cylinder as the cylinder, a first hub as the hub, and two first stators (54a, 54b) as the stators,
the second duct includes a second cylinder as the cylinder, a second hub as the hub, and two second stators (54a, 54b) as the stators,
the connector connects the first cylinder and the second cylinder to each other, and
the connector, the first hub, the two first stators, the second hub, and the two second stators are arranged in a straight line.

## Patentansprüche

1. Schuberzeugungsvorrichtung (24), welche wenigstens einen Propeller (34) umfasst, welcher dazu eingerichtet ist, Schub zu erzeugen, um zu veranlassen, dass sich ein Luftfahrzeug (10) vorwärtsbewegt, wobei die Schuberzeugungsvorrichtung umfasst:
eine Propellereinheit (30), welche den Propeller umfasst;
einen Kanal (38), welcher dazu eingerichtet ist, eine Peripherie des Propellers abzudecken; und
einen Motor (28, 94), welcher eine Drehwelle (40) umfasst, welche mit dem Propeller verbunden ist, und welche dazu eingerichtet ist, den Propeller zu drehen,
wobei der Kanal einen Zylinder (50), welcher um den Propeller herum angeordnet ist, eine Nabe (52), welche innerhalb des Zylinders angeordnet ist, und eine Mehrzahl von Statoren (54) umfasst, welche sich radial von der Nabe des Zylinders erstrecken,
die Nabe und jeder der Statoren hinter dem Propeller angeordnet sind,
die Propellereinheit und der Motor dazu eingerichtet sind, durch einen hinteren Flügel (16) des Luftfahrzeugs gehaltert zu sein,
die Propellereinheit hinter dem Motor angeordnet ist und
die Nabe über ein Lager (66, 68) mit der Drehwelle des Motors verbunden ist.

2. Schuberzeugungsvorrichtung nach Anspruch 1, wobei
die Propellereinheit eine Welle (36) umfasst, welche von dem Propeller nach hinten vorsteht, und
die Nabe über das Lager mit der Welle verbunden ist.

3. Schuberzeugungsvorrichtung nach Anspruch 1 oder 2,ferner umfassend:
eine erste Propellereinheit und eine zweite Propellereinheit als die Propellereinheit; und
einen Verbinder (90), welcher zwischen der ersten Propellereinheit und der zweiten Propellereinheit angeordnet ist und dazu eingerichtet ist, die erste Propellereinheit und die zweite Propellereinheit miteinander zu verbinden, wobei
die erste Propellereinheit einen ersten Kanal als den Kanal umfasst,
die zweite Propellereinheit einen zweiten Kanal als den Kanal umfasst,
die erste Propellereinheit und die zweite Propellereinheit in einer Breitenrichtung des Luftfahrzeugs aufgereiht sind und
der Verbinder den ersten Kanal und den zweiten Kanal miteinander verbindet.

4. Schuberzeugungsvorrichtung nach Anspruch 3, wobei
der erste Kanal einen ersten Zylinder als den Zylinder, eine erste Nabe als die Nabe und zwei erste Statoren (54a, 54b) als die Statoren umfasst,
der zweite Kanal einen zweiten Zylinder als den Zylinder, eine zweite Nabe als die Nabe und zwei zweite Statoren (54a, 54b) als die Statoren umfasst,
der Verbinder den ersten Zylinder und den zweiten Zylinder miteinander verbindet und
der Verbinder, die erste Nabe, die beiden ersten Statoren, die zweite Nabe und die beiden zweiten Statoren in einer geraden Linie angeordnet sind.

## Revendications

1. Dispositif de génération de poussée (24) comportant au moins une hélice (34) configurée pour générer une poussée pour amener un aéronef (10) à avancer, le dispositif de génération de poussée comprenant :
une unité d'hélice (30) comportant l'hélice ; un conduit (38) configuré pour recouvrir une périphérie de l'hélice ; et un moteur (28, 94) qui comporte un arbre de rotation (40) raccordé à l'hélice et qui est configuré pour faire tourner l'hélice,
dans lequel le conduit comporte un cylindre (50) disposé autour de l'hélice, un moyeu (52) disposé à l'intérieur du cylindre et une pluralité de stators (54) s'étendant radialement du moyeu au cylindre,
le moyeu et chacun des stators sont disposés à l'arrière de l'hélice, l'unité d'hélice et le moteur sont configurés pour être supportés par une aile arrière (16) de l'aéronef,
l'unité d'hélice est disposée à l'arrière du moteur et le moyeu est raccordé à l'arbre de rotation du moteur par l'intermédiaire d'un roulement (66, 68).

2. Dispositif de génération de poussée selon la revendication 1, dans lequel
l'unité d'hélice comporte un arbre (36) faisant saillie à l'arrière à partir de l'hélice, et
le moyeu est raccordé à l'arbre par l'intermédiaire du roulement.

3. Dispositif de génération de poussée selon la revendication 1 ou 2, comprenant en outre : une première unité d'hélice et une deuxième unité d'hélice en tant qu'unité d'hélice ; et
un raccord (90) disposé entre la première unité d'hélice et la deuxième unité d'hélice et configuré pour raccorder la première unité d'hélice et la deuxième unité d'hélice l'une à l'autre, dans lequel
la première unité d'hélice comporte un premier conduit en tant que conduit,
la deuxième unité d'hélice comporte un deuxième conduit en tant que conduit,
la première unité d'hélice et la deuxième unité d'hélice sont alignées dans une direction de largeur de l'aéronef, et
le raccord raccorde le premier conduit et le deuxième conduit l'un à l'autre.

4. Dispositif de génération de poussée selon la revendication 3, dans lequel
le premier conduit comporte un premier cylindre en tant que cylindre, un premier moyeu en tant que moyeu et deux premiers stators (54a, 54b) en tant que stators,
le deuxième conduit comporte un deuxième cylindre en tant que cylindre, un deuxième moyeu en tant que moyeu et deux deuxièmes stators (54a, 54b) en tant que stators,
le raccord raccorde le premier cylindre et le deuxième cylindre l'un à l'autre, et
le raccord, le premier moyeu, les deux premiers stators, le deuxième moyeu et les deux deuxièmes stators sont disposés en ligne droite.
